(19) Europäisches Patentamt
European Patent Office
Office européen des brevets

(11) **EP 4 537 674 A1**

(12) **EUROPEAN PATENT APPLICATION**

(43) Date of publication:
**16.04.2025  Bulletin 2025/16**

(21) Application number: **23306763.6**

(22) Date of filing: **10.10.2023**

(51) International Patent Classification (IPC):
**A23K 50/80** $^{(2016.01)}$     **A01K 97/04** $^{(2006.01)}$
**A23K 10/14** $^{(2016.01)}$     **A23K 40/10** $^{(2016.01)}$

(52) Cooperative Patent Classification (CPC):
**A23K 50/80; A01K 97/045; A23K 10/14;
A23K 20/142; A23K 20/147; A23K 20/163;
A23K 40/10; A23K 40/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ROQUETTE FRERES
62136 Lestrem (FR)**

(72) Inventors:
• **YU, Shiyao
  SHANGHAI (CN)**
• **HASJIM, Jovin
  62400 BETHUNE (FR)**
• **PORA, Bernard
  59190 HAZEBROUCK (FR)**
• **ZHAO, Xing
  Lianyungang City (CN)**

(74) Representative: **Plasseraud IP
104 Rue de Richelieu
CS92104
75080 Paris Cedex 02 (FR)**

(54) **USE OF POROUS STARCH AS FISH BAIT CARRIER**

(57)    The invention is related to a composition comprising a porous starch loaded with a hydrophilic fish attractant, its process of preparation, and its use as a biodegradable and non-toxic fish bait.

EP 4 537 674 A1

**Description**

This invention is in the field of fish baits.

It relates to a composition comprising porous starch and a hydrophilic fish attractant entrapped therein, that is able to slowly release said fish attractant into water yet being biodegradable, a process for the preparation thereof, and the use thereof as a fish bait.

STATE OF THE ART

The availability of a variety of fish baits has been known in the art.

Due to the reality of environmental deterioration, the application of degradable materials in fishing activities have gathered more and more attention. Fish baits made of non-degradable materials can cause obvious harmful or deleterious effects, especially to the marine environment.

More and more reports have shown that even very small non-degradable items, such as artificial lures, can have adverse effects on the marine environment since they are not degraded in the ocean and can be found in the bodies of some marine organisms.

For example, US 3,421,899 utilizes animal gelatin for the protein and hexamethylene-tetramine, formaldehyde, chromic acid, or dichromate salts as the toughening compound. The bait is sufficiently tough to hold its form when put on a hook, but slowly soluble in water.

Some plasticizers, such as hexamethylene-tetramine, are known to be toxic to aquatic organisms and can bioaccumulate in the food chain, posing a risk to both wildlife and humans.

Additionally, when hexamethylene-tetramine decomposes, it can release harmful nitrogen oxides into the atmosphere, contributing to air pollution and potentially causing respiratory problems.

Mixed flours or starches have also been used to produce artificial fish baits or lures.

For example, CN 102,835,585A describes a preparation method of crucian attracting powder, comprising the following components in percent by weight: freshwater shrimp powder, silkworm chrysalis meal, white fish powder, chicken intestine powder, tremella powder, lily powder, liquorice powder, sesame powder, oyster mushroom powder, radix *glehniae* powder, Chinese yam powder, *Pseudostellaria heterophylla* powder, sweet potato powder, lotus powder, milk powder and plant protein powder. This highly complicated fish bait formula disperses rapidly in the water and is unable to attract fish for a long period of time, which is not beneficial to the efficiency of fishing.

CN103,109,784A also prepares a bait comprising a traditional fish bait and a plant fiber. The addition of the plant fiber is to enhance the cohesion, anti-cracking, strength, and atomization, but it also increases the stickiness of the bait and the fishy smell from the bait is difficult to be removed from the fingers after the application. In addition, excessive fiber can be harmful to the well-being of the fish community in the water body.

SUMMARY OF THE INVENTION

The present invention aims at overcoming the drawbacks of the prior art by providing a a composition containing a porous starch loaded with a hydrophilic fish attractant.

The porous starch acts as a matrix able to carry a fish attractant and release it when it is immersed into water.

The composition of the invention is able to slowly release a fish attractant into water while being biodegradable and non-toxic for the marine environment.

Another object of the invention is a process for the preparation of said composition wherein the hydrophilic fish attractant is loaded into the porous starch, such as by soaking said porous starch in a solution containing said hydrophilic fish attractant.

Another object of the invention is the use of said composition comprising a porous starch loaded with a hydrophilic fish attractant as a fish bait.

DESCRIPTION OF THE PREFERRED EMBODIMENTS

A first object of the invention is a composition containing a porous starch loaded with a hydrophilic fish attractant.

Starch is a biodegradable and relatively inexpensive material, compared to plastics in most artificial fish baits, gelatin, and other common fish bait ingredients.

As used herein the expression "porous starch" refers to a granular starch that has been hydrolyzed by one or multiple amylolytic enzymes until multiple pores are visible on the surface of the starch granules by microscopic technique.

The starch used in the present invention for the preparation of porous starch may be wheat starch, waxy wheat starch, maize starch, waxy maize starch, rice starch, waxy rice starch, tapioca starch, waxy tapioca starch, potato starch, waxy potato starch, sweet potato starch, waxy sweet potato starch, pea starch, mung bean starch, barley starch, millet starch, sago starch, sorghum starch, quinoa starch, arrowroot starch, amaranth starch, lotus root starch, buckwheat starch, and mixtures thereof.

Thus, in a specific embodiment of the present invention, the porous starch is selected from the group consisting of porous wheat starch, porous waxy wheat starch, porous maize starch, porous waxy maize starch, porous rice starch, porous waxy rice starch, porous tapioca starch, porous waxy tapioca starch, porous potato starch, porous waxy potato starch, porous sweet potato starch, porous waxy sweet potato starch, porous pea starch, porous mung bean starch, porous barley starch, porous millet starch, porous sago starch, porous sorghum starch, porous quinoa starch, porous arrowroot starch, porous amaranth starch, porous lotus root starch, porous buckwheat starch, and mixtures thereof.

Preferably, the starch used in the present invention for the preparation of porous starch may be an A- type crystalline starch, such as wheat starch, waxy wheat starch, maize starch, waxy maize starch, rice starch, waxy rice starch, tapioca starch, waxy tapioca starch, barley starch, sorghum starch, quinoa starch, arrowroot starch, amaranth starch, buckwheat starch and mixtures thereof, preferably maize starch and rice starch. Thus, in a preferred embodiment of the present invention, the porous starch is selected from the group consisting of porous wheat starch, porous waxy wheat starch, porous maize starch, porous waxy maize starch, porous rice starch, porous waxy rice starch, porous tapioca starch, porous waxy tapioca starch, porous barley starch, porous sorghum starch, porous quinoa starch, porous arrowroot starch, porous amaranth starch, porous buckwheat starch and mixtures thereof, preferably porous maize starch and porous rice starch.

According to the present invention, the porous starch may be produced through an enzyme hydrolysis of native or modified starch granules with one or multiple amylolytic enzymes, such as alpha-amylase and amyloglucosidase, at a temperature inferior to the gelatinization temperature of the starch. The main enzymatic reaction is hydrolysis. However, the starch can be chemically modified, including but not limited to hydrolysis, substitution, oxidation and reduction reactions, such as the introduction of new ester and ether groups and the conversion of hydroxyl groups to carbonyl and carboxyl groups, and/or physically modified, such as annealing, heat-moisture treatment, and thermal inhibition, before or after the enzymatic hydrolysis.

In a preferred embodiment of the present invention, the porous starch is obtained from native starch granules by enzyme hydrolysis only and preferably by enzyme hydrolysis using alpha-amylase.

The resulting starch granules have a porous structure at least on the surface. The pores may extend from the surface of the starch granules to the interior of the granules. Preferably, they have a high number of large and small pores, which may or may not be connected to the hilum though internal channels.

In a preferred embodiment of the present invention, the porous starch has multiple pores on the surface with a size from 0.01 $\mu$m to 5 $\mu$m, in particular from 0.05 $\mu$m to 2.5 $\mu$m, and more particularly from 0.1 $\mu$m to 1 $\mu$m.

The porosity may be observed using scanning electron microscopy. The diameter of the pores can be observed using a Quanta 200F (FEI) scanning electron microscope with an image analysis program (EDAX Genesis software).

The particle size of the resulting starch granules may be further reduced by grinding, homogenizing or micronization before or after enzyme hydrolysis.

In one embodiment of the present invention, the porous starch has a particle size from 0.1 $\mu$m to 200 $\mu$m, in particular from 0.5 $\mu$m to 100 $\mu$m, more particularly from 1 $\mu$m to 50 $\mu$m. The particle size may be measured by laser diffraction particle sizer (Beckman Coulter LS 13320).

The porous starch used in the present invention is not gelatinized but is under granular form.

According to the present invention, porous starch is used as a carrier for a fish attractant by entrapping it in its pores.

The fish attractant entrapped into the pores is protected from the outside environment, thus having a prolonged shelf life. Advantageously, the porous starch is able to retain the odor of the fish attractant contained therein.

When immersed into water, the fish bait composition according to the present invention is able to release the fish attractant entrapped therein slowly into water.

The porous starch containing the fish attractant is thus able to attract fish for a relatively long time.

It can be used as a fish bait in seawater or freshwater, either by dispersing it in water or by hooking it on a fishhook.

The composition of the invention can be used to form a hookable bait having a density and structure that closely resemble a firm, fresh natural bait, offering positive grab and tension for successful hooking.

In one embodiment, the composition according to the invention further comprises a viscoelastic protein.

Such viscoelastic protein helps the porous starch loaded with the fish attractant to form a cohesive mass which can be hooked on a fishhook and easily removed from the fingers, and that can be retained on said fishhook for a long time when immerged into water and be slowly consumed by the fish.

When dispersed in water, the viscoelastic protein also helps to weight the porous starch loaded with the fish attractant down in water, so it does not stay at the surface but settle down slowly, thus remain in open water for a longer time.

The viscoelastic protein can be a protein selected from the group consisting of gluten, in particular wheat gluten, corn protein, soy protein, and pea protein. Preferably, the viscoelastic protein is wheat gluten.

The amount of porous starch and fish attractant in the composition may be varied according to each formulation depending on the type of fish attractant and the desired release time of it in water.

Typically, the amount of fish attractant relative to the amount porous starch is from 2 % to 10 % by weight [20 to about 100 mg/g of porous starch], in particular from 5 % to 7 % by weight [50 to about 70 mg/g of porous starch], more particularly around 6 % by weight [60 mg/g of porous starch].

The amount of fish attractant contained in the composition is typically from 1 % to 10 % by weight, in particular from 2.5 % to 6.5 % by weight, more particularly from 3 % to 5.5 % by weight with respect to the total weight of the composition.

The amount of porous starch contained in the composition is typically from 50 % to 95 % by weight, in particular from 70 % to 90 % by weight, more particularly from 80 % to 90 % by weight with respect to the total weight of the composition.

The hydrophilic fish attractant that can be loaded into the porous starch is any hydrophilic material, which attracts or stimulates fish to feed. The material can be a combination of materials.

The fish attractant can be a water-soluble amino acid, preferably chosen in the group consisting of lysine, methionine, tryptophan, leucine, histidine, isoleucine, valine, arginine, phenylalanine, threonine, taken alone or in combination, and is more preferably lysine.

The fish attractant can comprise other materials such as dimethylpropiothetine, dopa salt, powdered bone meal, powdered food solids, powdered anise, rhodinyl acetate, dehydrated fish meal, dried slaughterhouse waste products, powdered fish, egg, dried milk products, sodium chloride, molasses, fish powders and synthetic spices having a smell similar to that of fish meal, fish oil, stale fish, shell fish, krill powder, pulverized dried sardine, spray dried inactivated and/or autolyzed yeast, powdered squid, borax, wood flour, bentonite, pulp fibers, and cellulosic materials, dicarboxylic amino acids, and other amino acids, such as glutamic and aspartic acids, betaine, glycine, alanine, taurine, tryptamine, and tyramine.

Another object of the invention is a process of production of the composition of the invention as described previously, wherein the hydrophilic fish attractant is loaded into the porous starch, such as by soaking said porous starch in a solution containing said hydrophilic fish attractant.

In particular, porous starch is soaked in an aqueous solution of fish attractant to retain the desired amount of the fish attractant in the porous starch. The porous starch loaded with the fish attractant is then collected by filtration or centrifugation, followed by drying, such as by an oven, a fluidized bed dryer, or flash dryer.

In one embodiment, the porous starch loaded with the fish attractant is rehydrated with water and mixed with a viscoelastic protein. After being mixed thoroughly, the mixture can be rolled into a ball, which can be directly attached to the fishhook or lure.

Another object of the invention is the use of the composition of the invention as described previously as a fish bait, in particular for attracting fresh-water or seawater aquatic animals.

As described previously, the fish bait can be placed on a fishhook in fresh water or seawater, or can be dispersed into water in order to attract fished in a defined area.

FIGURES

Figure 1 represents the total amino acid release (mg/g starch) as a function of immersion time in water for rice.

Figure 2 represents the amino acid release rate (mg/g starch/min) as a function of immersion time in water for rice.

Figure 3 represents the total amino acid release (mg/g starch) as a function of immersion time in water for maize.

Figure 4 represents the release rate (mg/g starch/min) as a function of immersion time in water for maize.

EXAMPLE

This invention will be better understood in light of the following examples which are given for illustrative purposes only and do not intend to limit the scope of the invention, which is defined by the attached claims.

*Production of porous starch*

A 35% starch slurry was prepared using demineralized water, ensuring no lumping and sedimentation by constant agitation.

The slurry was heated to 50°C and adjusted to pH to 6.5 by slowly adding 3% NaOH solution.

LIQUOZYME O Supra 2.2X (a-amylase) was introduced to the starch slurry at a concentration of 5 μL enzyme per gram of dry starch, followed by thorough mixing.

The mixture was incubated at 50°C for 3 hours.

Subsequently, the enzyme was deactivated by adjusting the pH to 3.5 using a 5% HCl solution, which was allowed to proceed for a minimum of 30 minutes with stirring, while cooling to room temperature.

The pH of starch slurry was neutralized to 5.5 using 3% NaOH solution at room temperature.

The porous starch was then collected through vacuum filtration and washed twice with demineralized water. Finally, the porous starch was dried in an oven at 40°C overnight until it reached a moisture content of 11-13%. The dried porous starch was ground into powder.

*Preparation of starch (native or porous) loaded with L-lysine (Retention Capacity)*

Native or porous starch (as obtained above) was mixed with 50 w/v% L-lysine solution to obtain a starch slurry at 40 w/w% starch concentration and stirred continuously for 30 minutes.

The starch loaded with L-lysine was collected by centrifugation at 4000 g/min and subsequently dried in an oven at 40°C overnight. The dried starch was ground into powder.

Dumas method according to China national standard GB5009.5-2016 was utilized to determine the amino acid content in the starch, which was corrected by the amino acid content in the blank sample (starch only).

*Release rate*

15 g of native or porous starch loaded with L-lysine (as obtained above) was immersed in 60 mL water in a 100-mL test tube with mixing.

The mixture was placed in a water bath at 20°C.

The supernatant area of the tubes was stirred slowly, allowing the starch to sediment.

At predetermined time points (0 min, 10 min, 20 min, 30 min, 60 min, 120 min, and 360 min), 5 mL aliquots of the supernatant were collected for amino acid content analysis using either Dumas or NIR method, allowing for the quantification of released L-Lysine from the starch over different periods of time.

*The results are indicated in Table 1.*

*Table 1*

| Time (min) | Total amino acid released (mg/g starch) | Total amino acid released (%) | Amino acid release rate (mg/g starch/min) | Amino acid release rate (%/min) | Total amino acid retained (mg/g starch) |
|---|---|---|---|---|---|
| Native rice starch loaded with L- Lysine | | | | | 50.97 |
| 0 | 1.54 | 3.03 | | | |
| 10 | 1.91 | 3.74 | 0.036 | 0.071 | |
| 20 | 2.14 | 4.19 | 0.023 | 0.046 | |
| 30 | 2.21 | 4.34 | 0.008 | 0.015 | |
| 60 | 2.42 | 4.75 | 0.007 | 0.013 | |
| 120 | 2.88 | 5.65 | 0.008 | 0.015 | |
| 360 | 4.63 | 9.09 | 0.007 | 0.014 | |
| Porous rice starch loaded with L- Lysine | | | | | 52.68 |
| 0 | 5.71 | 10.84 | | | |
| 10 | 6.01 | 11.41 | 0.030 | 0.057 | |
| 20 | 6.14 | 11.65 | 0.013 | 0.024 | |
| 30 | 6.11 | 11.60 | -0.002 | -0.005 | |
| 60 | 6.72 | 12.76 | 0.020 | 0.038 | |
| 120 | 8.04 | 15.27 | 0.022 | 0.042 | |
| 360 | 12.20 | 23.16 | 0.017 | 0.033 | |

(continued)

| Native maize starch loaded with L- Lysine | | | | | 47.12 |
|---|---|---|---|---|---|
| 0 | 3.51 | 7.44 | | | |
| 10 | 4.23 | 8.97 | 0.072 | 0.153 | |
| 20 | 4.26 | 9.05 | 0.004 | 0.008 | |
| 30 | 4.26 | 9.03 | -0.001 | -0.001 | |
| 60 | 4.36 | 9.24 | 0.003 | 0.007 | |
| 120 | 4.56 | 9.67 | 0.003 | 0.007 | |
| 360 | 5.41 | 11.47 | 0.004 | 0.008 | |
| Porous maize starch loaded with L- Lysine | | | | | 56.68 |
| 0 | 2.13 | 3.76 | | | |
| 10 | 2.88 | 5.08 | 0.075 | 0.132 | |
| 20 | 3.08 | 5.43 | 0.019 | 0.034 | |
| 30 | 3.74 | 6.59 | 0.066 | 0.117 | |
| 60 | 4.74 | 8.36 | 0.033 | 0.059 | |
| 120 | 6.71 | 11.84 | 0.033 | 0.058 | |
| 360 | 12.41 | 21.89 | 0.024 | 0.042 | |

Release rate of amino acid = (total amino acid released at $t_n$ – total amino acid released at $t_{n-1}$) / ($t_n$ - $t_{n-1}$)

Total % of amino acid released = Total amino acid released in mg per gram of starch / Amino acid retained in mg per gram of starch

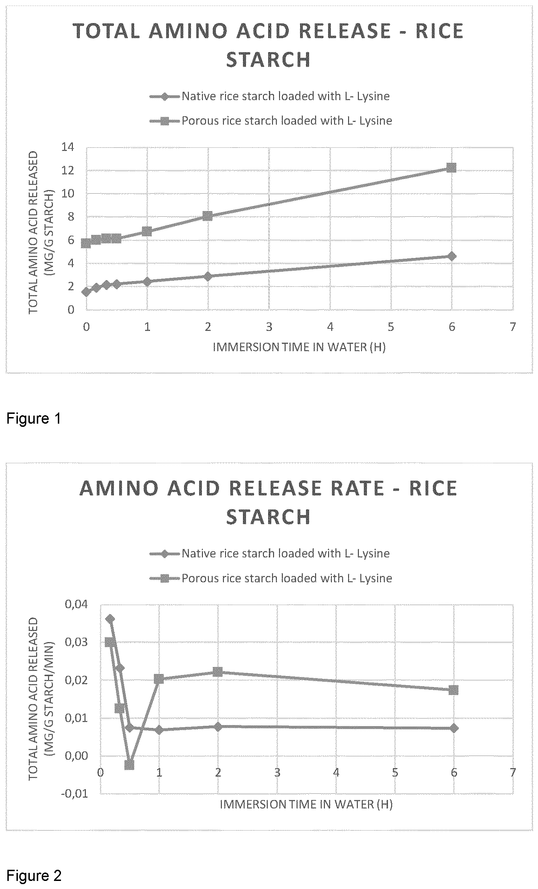

Figure 1 represents the total amino acid release (mg/g starch) as a function of immersion time in water for rice.

Figure 2 represents the amino acid release rate (mg/g starch/min) as a function of immersion time in water for rice.

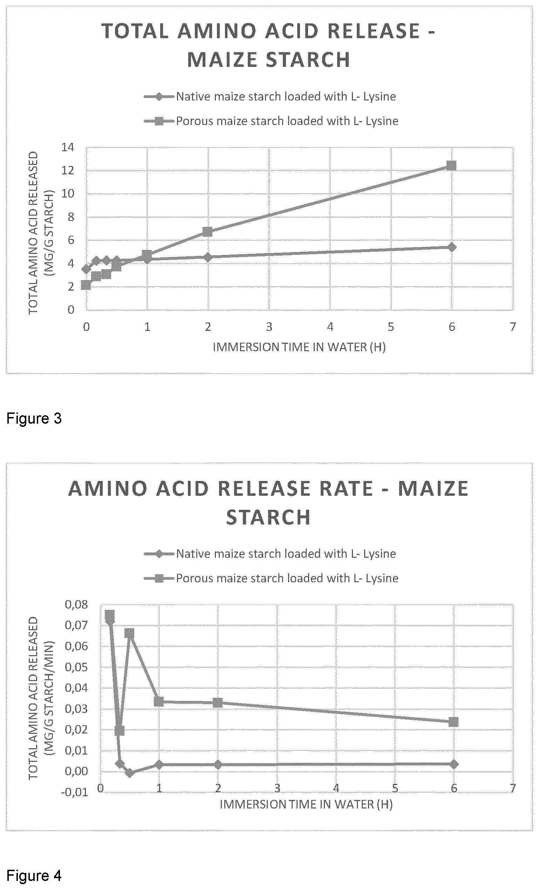

Figure 3 represents the total amino acid release (mg/g starch) as a function of immersion time in water for maize.

Figure 4 represents the release rate (mg/g starch/min) as a function of immersion time in water for maize.

The results of Table 1 show that porous starch is able to retain more fish attractant than its native starch counterpart.

For the efficiency of the fish bait, it is important that the starch can release substantial amount of fish attractant for a long period of time, such as, in this example, the release rates of L-lysine from porous starches were above 0.01 mg/g starch/min up to 6 hours. The results also show that compared to its native counterpart:

- the porous starch is able to release more fish attractant at a longer time (> 1 hour);
- the porous starch is able to release a greater percentage of the initially retained fish attractant.

For these reasons, the porous starch is more suitable than native starch as a fish attractant carrier for the purpose of fishing activity.

**Claims**

1. A composition comprising a porous starch loaded with a hydrophilic fish attractant.

2. The composition according to claim 1, wherein the starch of the porous starch is selected from the group consisting of wheat starch, waxy wheat starch, maize starch, waxy maize starch, rice starch, waxy rice starch, tapioca starch, waxy tapioca starch, potato starch, waxy potato starch, sweet potato starch, waxy sweet potato starch, pea starch, mung bean starch, barley starch, millet starch, sago starch, sorghum starch, quinoa starch, arrowroot starch, amaranth starch, lotus root starch and buckwheat starch.

3. The composition according to claims 1 or 2, wherein the porous starch has pores having a size from 0.01 μm to 5 μm, in particular from 0.05 μm to 2.5 μm, more particularly from 0.1 μm to 1 μm.

4. The composition according to any one of claims 1 to 3, wherein, the porous starch has a particle size from 0.1 μm and 200 μm, in particular from 0.5 μm to 100 μm, and more particularly from 1 μm to 50 μm.

5. The composition according to any one of claims 1 to 4, wherein the hydrophilic fish attractant is a water-soluble amino acid.

6. The composition according to claim 5, wherein water-soluble amino acid is selected from the group consisting of lysine, methionine, tryptophan, leucine, histidine, isoleucine, valine, arginine, phenylalanine, threonine, and mixtures thereof.

7. The composition according to any one of claims 1 to 4, wherein the hydrophilic fish attractant is dimethylpropiothetine, dopa salt, powdered bone meal, powdered food solids, powdered anise, rhodinyl acetate, dehydrated fish meal, dried slaughterhouse waste products, powdered fish, egg, dried milk products, sodium chloride, molasses, fish powders and synthetic spices having a smell similar to that of fish meal, fish oil, stale fish, shell fish, krill powder, pulverized dried sardine, spray dried inactivated and/or autolyzed yeast, powdered squid, borax, wood flour, bentonite, pulp fibers, and cellulosic materials, dicarboxylic amino acids, and other amino acids, such as glutamic and aspartic acids, betaine, glycine, alanine, taurine, tryptamine, and tyramine.

8. The composition according to any one of claims 1 to 7, further comprising a viscoelastic protein.

9. The composition according to claim 8, wherein the viscoelastic protein is selected from the group consisting of gluten, in particular wheat gluten, corn protein, soy protein, and pea protein.

10. The composition according to anyone of claims 1 to 9, wherein the relative amount of fish attractant relative to the amount porous starch is from 2 % to 10 % by weight [20 to about 100 mg/g of porous starch], in particular from 5 % to 7 % by weight [50 to about 70 mg/g of porous starch], more particularly around 6 % by weight [60 mg/g of porous starch].

11. The composition according to anyone of claims 1 to 10, wherein the amount of fish attractant contained in the composition is from 1 % to 10 % by weight, in particular from 2.5 % to 6.5 % by weight, more particularly from 3 % to 5.5 % by weight with respect to the total weight of the composition.

12. The composition according to anyone of claims 1 to 11, wherein the amount of porous starch contained in the composition is from 50 % to 95 % by weight, in particular from 70 % to 90 % by weight, more particularly from 80 % to 90 % by weight with respect to the total weight of the composition.

13. A fish bait comprising the composition according to anyone of claims 1 to 12.

14. A process of production of the composition according to any one of claims 1 to 12, comprising:

loading the hydrophilic fish attractant into the porous starch, such as by soaking said porous starch in a solution containing said hydrophilic fish attractant;
collecting and drying the loaded porous starch.

15. The process of claim 14, further comprising:

rehydrating the dried loaded porous starch with water and mixing the rehydrated starch with a viscoelastic protein;
making the mixture into a shape, such as a ball shape, directly attachable to a fishhook or lure.

16. Use of the composition according to any one of claims 1 to 12, as a fish bait.

## TOTAL AMINO ACID RELEASE - RICE STARCH

Native rice starch loaded with L- Lysine

Porous rice starch loaded with L- Lysine

TOTAL AMINO ACID RELEASED (MG/G STARCH)

IMMERSION TIME IN WATER (H)

Figure 1

## AMINO ACID RELEASE RATE - RICE STARCH

Native rice starch loaded with L- Lysine

Porous rice starch loaded with L- Lysine

TOTAL AMINO ACID RELEASED (MG/G STARCH/MIN)

IMMERSION TIME IN WATER (H)

Figure 2

Figure 3

Figure 4

Europäisches
Patentamt

European
Patent Office

Office européen
des brevets

# EUROPEAN SEARCH REPORT

**Application Number**

EP 23 30 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 245 420 A (CARR WILLIAM E S) 20 January 1981 (1981-01-20) * column 1, line 37 - column 2, line 35; claims 1-3; examples 1-10 * * column 4, line 60, paragraph r - column 5, line 20, last paragraph * ----- | 1-16 | INV. A23K50/80 A01K97/04 A23K10/14 A23K40/10 |
| X | WO 2007/071791 A1 (NOVAMONT SPA [IT]; DEGLI INNOCENTI FRANCESCO [IT] ET AL.) 28 June 2007 (2007-06-28) * page 1, lines 17-30; claims 1,5,17; example 1 * * page 4, lines 20-23 * ----- | 1-7, 10-14,16 | |
| X | JP S61 96958 A (NIHON NOSAN KOGYO) 15 May 1986 (1986-05-15) * claim 1; example 1 * ----- | 1-14,16 | |
| X | CN 101 579 038 B (ZHEJIANG HENGXING FEEDSTUFF CO LTD) 20 June 2012 (2012-06-20) * claims 1-6; examples 1-3 * ----- | 1-3,5-16 | |
| A | US 2003/066231 A1 (OLLIS HOWARD D [US] ET AL) 10 April 2003 (2003-04-10) * claims 1,4,8,12; example 5 * ----- | 1-16 | TECHNICAL FIELDS SEARCHED (IPC) A23K A01K |

The present search report has been drawn up for all claims

| Place of search | Date of completion of the search | Examiner |
|---|---|---|
| The Hague | 3 May 2024 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6763

This annex lists the patent family members relating to the patent documents cited in  the above-mentioned European search report.
The members are as contained in the European Patent Office EDP file on
The European Patent Office is in no way liable for these particulars which are merely given for the purpose of information.

03-05-2024

| Patent document cited in search report | | Publication date | Patent family member(s) | | Publication date |
|---|---|---|---|---|---|
| US 4245420 | A | 20-01-1981 | NONE | | |
| WO 2007071791 | A1 | 28-06-2007 | EP | 1978822 A1 | 15-10-2008 |
| | | | NO | 346700 B1 | 28-11-2022 |
| | | | WO | 2007071791 A1 | 28-06-2007 |
| JP S6196958 | A | 15-05-1986 | NONE | | |
| CN 101579038 | B | 20-06-2012 | NONE | | |
| US 2003066231 | A1 | 10-04-2003 | AU | 2002329946 B2 | 23-02-2006 |
| | | | CA | 2458515 A1 | 13-03-2003 |
| | | | EP | 1432320 A2 | 30-06-2004 |
| | | | JP | 2005501540 A | 20-01-2005 |
| | | | MX | PA04002056 A | 17-02-2005 |
| | | | PL | 367426 A1 | 21-02-2005 |
| | | | RU | 2333668 C2 | 20-09-2008 |
| | | | US | 2003066231 A1 | 10-04-2003 |
| | | | US | 2004170662 A1 | 02-09-2004 |
| | | | US | 2004234570 A1 | 25-11-2004 |
| | | | WO | 03020049 A2 | 13-03-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3421899 A
- CN 102835585 A
- CN 103109784 A
- GB 500952016 A